# EUROPEAN PATENT SPECIFICATION

(11) **EP 2 801 916 B1**
(45) Date of publication and mention of the grant of the patent: **05.07.2017**
(21) Application number: 13825393.5
(22) Date of filing: 23.01.2013
(51) Int. Cl.: G06F 15/177, G06F 9/445

(54) **CONFIGURATION METHOD AND SYSTEM FOR SHARING INPUT DEVICE AMONG EQUIPMENTS**
KONFIGURATIONSVERFAHREN UND SYSTEM ZUR GEMEINSAMEN NUTZUNG EINER EINGABEVORRICHTUNG ZWISCHEN EINRICHTUNGEN
PROCÉDÉ ET SYSTÈME DE CONFIGURATION POUR LE PARTAGE D'UN DISPOSITIF D'ENTRÉE ENTRE DES ÉQUIPEMENTS

(30) Priority: 30.07.2012 CN 201210265897
(43) Date of publication of application: 12.11.2014
(73) Proprietor: Huawei Technologies Co., Ltd., Longgang District Shenzhen, Guangdong 518129 (CN)
(72) Inventor: LI, Dongyuan, Shenzhen Guangdong 518129 (CN)
(74) Representative: Pfenning, Meinig & Partner mbB
(86) International application number: PCT/CN2013/070903
(87) International publication number: WO 2014/019350

(56) References cited:
- WO-A1-2012/049199
- CA-A1- 2 345 526
- CN-A- 1 825 826
- CN-A- 101 354 614
- US-A1- 2008 222 338
- US-A1- 2011 264 772
- US-A1- 2011 276 625
- US-B1- 6 496 880

## Description

### TECHNICAL FIELD

The present invention pertains to the computer field, and in particular, relates to a method and a system for configuring sharing of an input apparatus among devices.

### BACKGROUND

At present, when a plurality of devices such as a desktop computer, a laptop computer, a tablet computer, and a mobile communications terminal are placed together, a user often hopes to use only one keyboard and one mouse for input, without requiring constant switching between a plurality of keyboards and mouses. Therefore, the prior art provides the Synergy software. The Synergy software is a type of software that enables a user to simultaneously operate and control a plurality of devices by using only one keyboard and one mouse. The user can install the Synergy software on different systems including Windows, Linux, Mac OS, and the like. After a master-slave relationship is set, a plurality of devices can be operated and controlled by using one keyboard and one mouse. To switch an operation and control from a device A to a device B, the user only needs to move a mouse pointer out of a screen border of the device A to a screen of the device B.

However, the user must manually configure an inter-device shared input apparatus in a display configuration file of each device first when using the Synergy software, which causes inconvenience to operations.

US 2011/0276625 A1 discloses a management controller for host-independent keyboard, video and moue redirection between a local and a remote device.

US 2011/0264772 A1 discloses a method and system for configuring a client device using a configuration device in a peer-to-peer network.

CA 2345562 A1 discloses a method and system for generating a user interface for a plurality of devices connected to a home network system.

### SUMMARY

The subject matter of the present invention is defined by the accompanying claims. Further embodiments not covered by the claims are provided for background information in order to promote a deeper understanding of the invention.

A purpose of embodiments of the present invention is to provide a method for configuring sharing of an input apparatus among devices, so as to resolve a problem in the prior art that sharing of an input apparatus among devices must first be manually configured in a display configuration file of each device, which causes inconvenience to operations.

The examples are implemented as follows: A method for configuring sharing of an input apparatus among devices is provided, where the method includes:
receiving an instruction for configuring sharing of an input apparatus among devices,
where the devices include this device and at least one adjacent device;
sending an adjacent device search request message by using a communications module of this device;
receiving device information fed back by the adjacent device according to the adjacent device search request message;
analyzing a device name and a network address of the adjacent device according to the device information; and
transferring a configuration file of configuring sharing of the input apparatus among devices to the adjacent device, so that the adjacent device configures sharing of the input apparatus among devices according to the configuration file.

Another purpose of the examples is to provide a system for configuring sharing of an input apparatus among devices, where the system includes:
a first instruction receiving module, configured to receive an instruction for configuring sharing of an input apparatus among devices, where the devices include this device and
at least one adjacent device;
a first message sending module, configured to send an adjacent device search request message by using a communications module of this device;
a first information receiving module, configured to receive device information fed back by the adjacent device according to the adjacent device search request message;
a first analyzing module, configured to analyze a device name and a network address of the adjacent device according to the device information; and
a first transferring module, configured to transfer a configuration file of configuring sharing of the input apparatus among devices to the adjacent device, so that the adjacent device configures sharing of the input apparatus among devices according to the configuration file.

Another purpose of the examples is to provide a method for configuring sharing of an input apparatus among devices, where the method includes:
sending an adjacent device search request message by using a communications module of this device according to a predetermined period, where the devices include this device and at least one adjacent device;
receiving device information fed back by the adjacent device according to the adjacent device search request message; and
if this device has completed configuration of sharing the input apparatus among devices,
sending a query instruction to the adjacent device to query whether the adjacent device has completed the configuration of sharing the input apparatus among devices; if feedback of no configuration is received, sending a configuration file of configuring sharing of the input apparatus among devices to the adjacent device, so that the adjacent device configures sharing of the input apparatus among devices according to the configuration file.

Another purpose of the examples is to provide a system for configuring sharing of an input apparatus among devices, where the system includes:
a third message sending module, configured to send an adjacent device search request message by using a communications module of this device according to a predetermined period, where the devices include this device and at least one adjacent device;
a third information receiving module, configured to receive device information fed back by the adjacent device according to the adjacent device search request message;
and
a first querying module, configured to: if this device has completed configuration of sharing the input apparatus among devices, send a query instruction to the adjacent device to query whether the adjacent device has completed the configuration of sharing the input apparatus among devices; if feedback of no configuration is received, send a configuration file of configuring sharing of the input apparatus among devices to the adjacent device, so that the adjacent device configures sharing of the input apparatus among devices according to the configuration file.

Another purpose of the examples is to provide a method for operating an adjacent device sharing an input apparatus, where the method includes:
receiving an instruction for operating the adjacent device;
determining whether the adjacent device is operated by a person; if yes, sending, by using a communications module of this device, an adjacent device operation request applied for by this device, so as to query a user who uses the adjacent device about whether management permission can be transferred; and
receiving a response message fed back by the adjacent device; if the response message indicates that the adjacent device can be operated, sending keyboard, mouse, or touch action data of this device to the adjacent device so as to operate the adjacent device;
and eliminating an impact on this device caused by a keyboard, mouse, or touch action of this device.

Another purpose of the examples is to provide a system for operating an adjacent device sharing an input apparatus, where the system includes:
a third instruction receiving module, configured to receive an instruction for operating the adjacent device;
a determining module, configured to determine whether the adjacent device is operated by a person;
a request sending module, configured to: when the determining module determines that the adjacent device is operated by a person, send, by using a communications module of this device, an adjacent device operation request applied for by this device, so as to query a user who uses the adjacent device about whether management permission can be transferred;
a response message receiving module, configured to receive a response message fed back by the adjacent device; and
a data sending module, configured to: when the response message received by the response message receiving module indicates that the adjacent device can be operated,
send keyboard, mouse, or touch action data of this device to the adjacent device so as to operate the adjacent device; and eliminating an impact on this device caused by a keyboard, mouse, or touch action of this device.

Another purpose of the examples is to provide a method for managing an adjacent device sharing an input apparatus, where the method includes:
configuring this device as a management device for managing the adjacent device sharing the input apparatus after the adjacent device completes configuration of sharing the input apparatus among devices;
displaying, by this device, information about all adjacent devices that complete the configuration of sharing the input apparatus among devices, so that a user selects which adjacent device is to be managed;
acquiring, by using a communications module of this device, screen display content of the adjacent device selected by a user or a default adjacent device, and displaying the screen display content on a monitor of this device;
if the user performs an input operation by using an input apparatus of this device, transferring input operation information to the adjacent device selected by the user or the default adjacent device, so that the adjacent device selected by the user or the default adjacent device performs the corresponding input operation; and
acquiring, by using the communications module of this device, a result after the adjacent device selected by the user or the default adjacent device performs the corresponding input operation, and displaying the result on the monitor of this device.

Another purpose of the examples is to provide a system for managing an adjacent device sharing an input apparatus, where the system includes:
a management device configuring module, adapted to: after the adjacent device completes configuration of sharing an input apparatus, configure this device as a management device for managing the adjacent device sharing the input apparatus;
a display module, configured to display, by this device, information about all adjacent devices that complete the configuration of sharing the input apparatus among devices, so that a user selects which adjacent device is to be managed;
a display content acquiring module, configured to acquire, by using a communications module of this device, screen display content of the adjacent device selected by the user or a default adjacent device, and display the screen display content on a monitor of this device;
an information transferring module, configured to: if the user performs an input operation by using an input apparatus of this device, transfer input operation information to the adjacent device selected by the user or the default adjacent device, so that the adjacent device selected by the user or the default adjacent device performs the corresponding input operation; and
a result acquiring module, configured to acquire, by using the communications module of this device, a result after the adjacent device selected by the user or the default adjacent device performs the corresponding input operation, and display the result on the monitor of this device.

In the examples by using the communications module of this device, the adjacent device search request message is sent, and the configuration file of configuring sharing of the input apparatus among devices is transferred to the adjacent device, so that the adjacent device configures sharing of the input apparatus among devices according to the configuration file, thereby resolving the problem in the prior art that sharing of an input apparatus among devices must first be manually configured in a display configuration file of each device, which causes inconvenience to operations. Embodiment 1 of the present invention enables a user to configure all adjacent devices on only one device when configuring the inter-device shared input apparatus, and the operations are convenient.

### BRIEF DESCRIPTION OF DRAWINGS

FIG. 1 is a flowchart of a method for configuring sharing of an input apparatus among devices according to Embodiment 1 of the present invention;
FIG. 2 to FIG. 4 are schematic diagrams of a configuration interface according to Embodiment 1 of the present invention;
FIG. 5 is a block diagram of a function module of a system for configuring sharing of an input apparatus among devices according to Embodiment 2 of the present invention;
FIG. 6 is a flowchart of a method for configuring sharing of an input apparatus among devices according to Example 3 of the present invention;
FIG. 7 is a block diagram of a function module of a system for configuring sharing of an input apparatus among devices according to Example 4 of the present invention;
FIG. 8 is a flowchart of a method for operating an adjacent device according to Example 5 of the present invention;
FIG. 9 is a block diagram of a function module of a system for operating an adjacent device according to Example 6 of the present invention;
FIG. 10 is a flowchart of a method for managing an adjacent device sharing an input apparatus according to Example 7 of the present invention;
FIG. 11 and FIG. 12 are schematic diagrams of an arrangement area of a configuration interface according to Example 7 of the present invention; and
FIG. 13 is a block diagram of a function module of a system for managing an adjacent device sharing an input apparatus according to Example 8 of the present invention.

### DESCRIPTION OF EMBODIMENTS

To make the objectives, technical solutions, and beneficial effects of the present invention more comprehensible, the following further describes the present invention in detail with reference to the accompanying drawings and embodiments. It should be understood that the specific embodiments described herein are merely used for describing the present invention, but are not intended to limit the present invention.

The following describes specific implementation of the present invention in detail with reference to specific embodiments.

### Embodiment 1

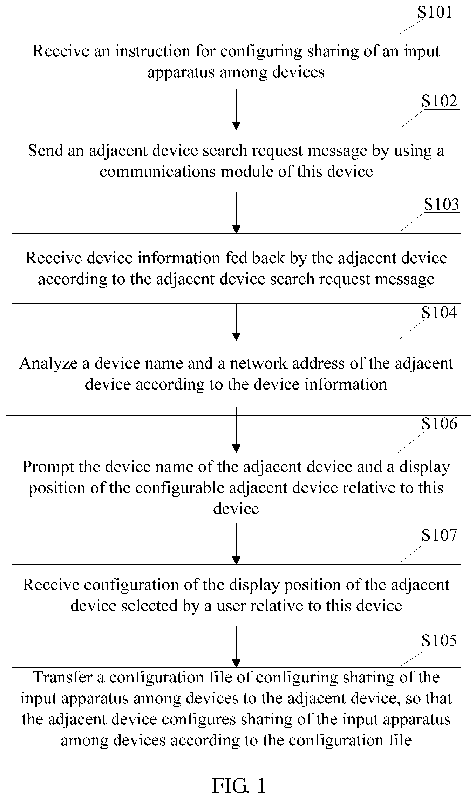

Referring to FIG. 1, a method for configuring sharing of an input apparatus among devices provided by Embodiment 1 of the present invention includes the following steps:
S101: Receive an instruction for configuring sharing of an input apparatus among devices.

In Embodiment 1 of the present invention, the devices include this device and at least one adjacent device, and the instruction for configuring sharing of an input apparatus among devices may be: a display border of this device is touched, a mouse cursor of this device collides with the display border according to the predetermined number of times, a preset file icon of this device collides with the display border according to the predetermined number of times and/or this device is shaken at a predetermined speed.

The file icon may be an icon of a media file and a data file such as a picture, a photograph, music, a video, and an e-book. That this device is shaken at the predetermined speed is sensed by a motion sensing module of this device. The adjacent device and this device may both be a desktop computer, a laptop computer, a tablet computer, a mobile communications terminal, and the like.

S102. Send an adjacent device search request message by using a communications module of this device.

In Embodiment 1 of the present invention, the communications module may be a Wi-Fi communications module, an Ethernet interface communications module, a Bluetooth communications module, and the like.

S103: Receive device information fed back by the adjacent device according to the adjacent device search request message.

In Embodiment 1 of the present invention, the device information includes a device name, a network address, and the like.

S104. Analyze the device name and the network address of the adjacent device according to the device information.

S105. Transfer a configuration file of configuring sharing of the input apparatus among devices to the adjacent device, so that the adjacent device configures sharing of the input apparatus among devices according to the configuration file.

In Embodiment 1 of the present invention, between step S104 and step S105, the method may further include the following steps:
S106: Prompt the device name of the adjacent device and a display position of the configurable adjacent device relative to this device.

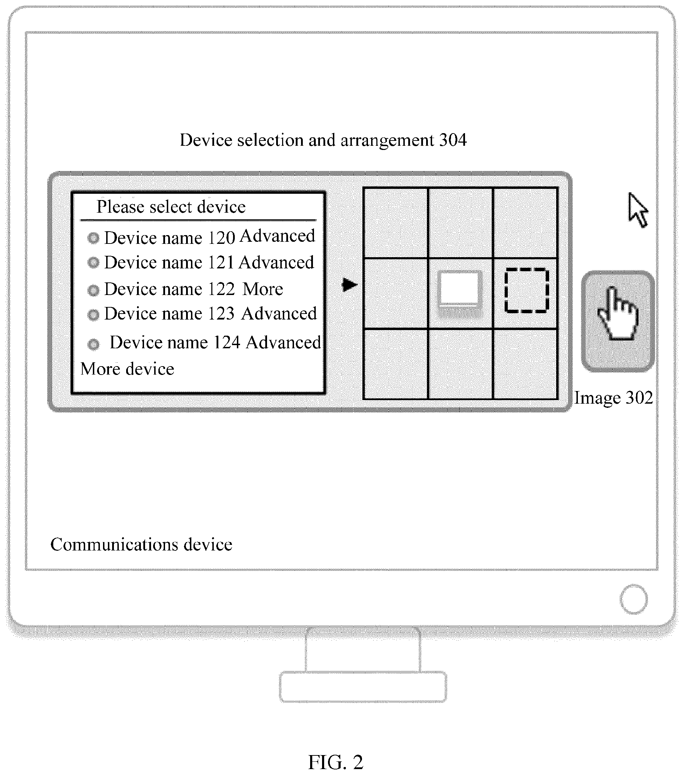

A configuration interface shown in FIG. 2 is divided into two areas. One is a device group area. In this group, a user may find the adjacent device, and therefore perform dragging or moving, so that the adjacent device can be configured around this device. The other is an arrangement area. The arrangement area provides a clear arrangement diagram of a display position for the user. The user may then perform adjustment according to an actual situation, including adjusting this device located in a center, and may further directly delete the adjacent device in the arrangement area by using a keyboard or a right mouse button.

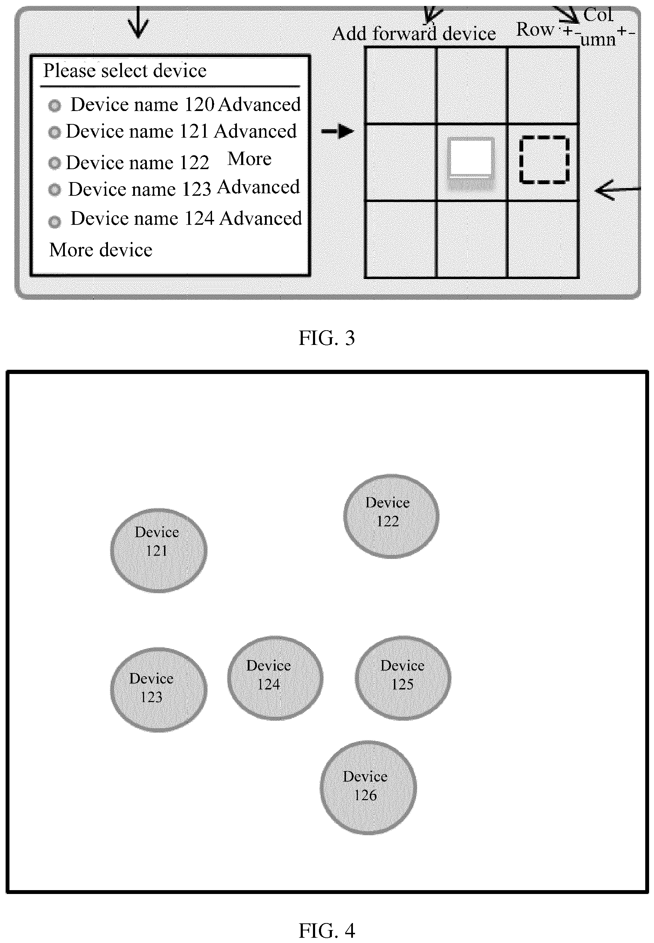

When there are a large number of adjacent devices, that is, exceeding three rows and three columns, a function of adding a row or a column may be provided, so that the user can configure the display position (as shown in FIG. 3) for more adjacent devices. Besides the device group area and arrangement area, the configuration interface shown in FIG. 3 further includes a button area. An operation may be performed in the button area, thereby helping the user add a new row or column and making the arrangement area seem to be larger.

In addition, for display of the device group area, FIG. 2 and FIG. 3 provide a list display. The display may also be in a structural manner such as a navigation tree and a device lattice diagram displayed on a map. The display may also be a display diagram of positions in a random state as shown in FIG. 4.

S107. Receive configuration of the display position of the adjacent device selected by a user relative to this device.

As shown in FIG. 2 and FIG. 3, the user may drag a device object on the left to the arrangement area on the right. In the figures, the device in a middle position is this device. The user may drag the device on the left to a position such as left, right, upper, lower, upper left, upper right, lower right, and lower left relative to this device.

In Embodiment 1 of the present invention, after step S105, the method may further include the following steps:
receiving confirmed configuration completion information fed back by the adjacent device; and
after the configuration is completed, this device and the configured adjacent device may be simultaneously used by one user, that is, the mouse and the keyboard are shared.

In Embodiment 1 of the present invention, between step S105 and step S107, the method may further include the following steps:
sending an application message indicating whether to intend to accept the configuration to the adjacent device selected by the user; and
receiving an intention message fed back by the adjacent device selected by the user;
performing step S105 if the intention message indicates an intention to accept the configuration, or terminating a process if the intention message indicates an intention not to accept the configuration.

In Embodiment 1 of the present invention, this device and the adjacent device communicate in a wireless manner, and the wireless manner includes Bluetooth, infrared, or Wi-Fi.

In Embodiment 1 of the present invention, by using the communications module of this device, the adjacent device search request message is sent, and the configuration file of configuring sharing of the input apparatus among devices is transferred to the adjacent device, so that the adjacent device configures sharing of the input apparatus among devices according to the configuration file, thereby resolving the problem in the prior art that the inter-device shared input apparatus must be manually configured in a display configuration file of each device first, which causes inconvenience to operations. Embodiment 1 of the present invention enables a user to configure all adjacent devices on only one device when configuring the inter-device shared input apparatus, and the operations are convenient.

### Embodiment 2

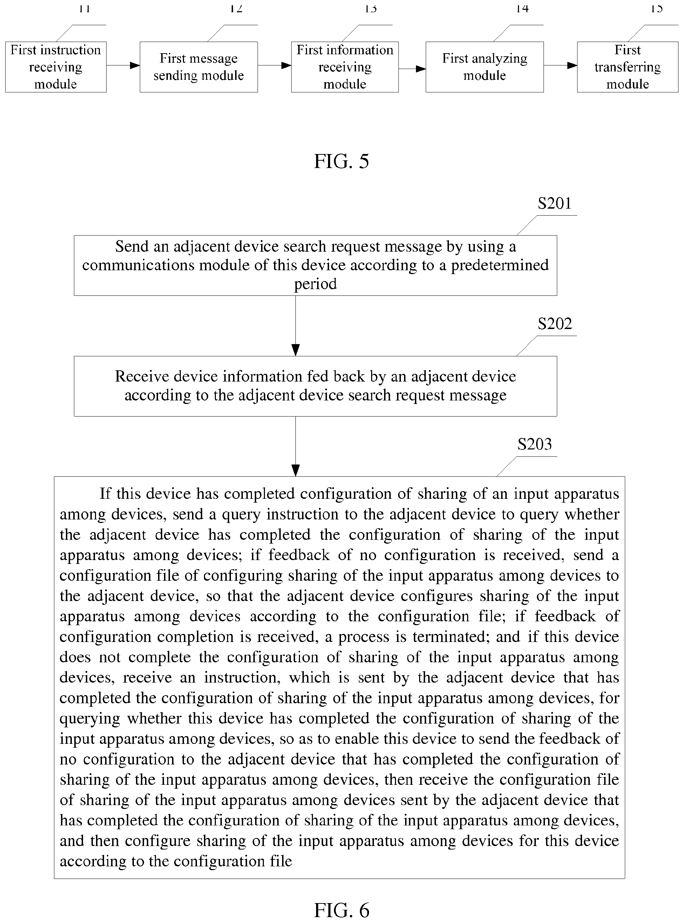

Referring to FIG. 5, a system for configuring sharing of an input apparatus among devices provided by Embodiment 2 of the present invention includes:
a first instruction receiving module 11, configured to receive an instruction for configuring sharing of an input apparatus among devices, where the devices include this device and at least one adjacent device, and the instruction for configuring sharing of an input apparatus among devices may be: a display border of this device is touched,
a mouse cursor of this device collides with the display border according to the predetermined number of times, a preset file icon of this device collides with the display border according to the predetermined number of times and/or this device is shaken at a predetermined speed;
a first message sending module 12, configured to send an adjacent device search request message by using a communications module of this device;
a first information receiving module 13, configured to receive device information fed back by the adjacent device according to the adjacent device search request message;
a first analyzing module 14, configured to analyze a device name and a network address of the adjacent device according to the device information; and
a first transferring module 15, configured to transfer a configuration file of configuring sharing of the input apparatus among devices to the adjacent device, so that the adjacent device configures sharing of the input apparatus among devices according to the configuration file.

In Embodiment 2 of the present invention, the system further includes:
a first prompting module, configured to prompt the device name of the adjacent device and a display position of the configurable adjacent device relative to this device; and
a first configuration module, configured to receive configuration of the display position of the adjacent device selected by a user relative to this device.

In Embodiment 2 of the present invention, the system further includes:
a second information receiving module, configured to receive confirmed configuration completion information fed back by the adjacent device.

In Embodiment 2 of the present invention, the system further includes:
a second message sending module, configured to send an application message indicating whether to intend to accept the configuration to the adjacent device selected by the user; and
a first message receiving module, configured to receive an intention message fed back by the adjacent device selected by the user, and the first transferring module transfers a configuration file of configuring sharing of the input apparatus among devices to the adjacent device if the intention message indicates an intention to accept the configuration, or a process is terminated if the intention message indicates an intention not to accept the configuration.

In Embodiment 2 of the present invention, the first message sending module sends the adjacent device search request message by using the communications module of this device, and the first transferring module transfers the configuration file of configuring sharing of the input apparatus among devices to the adjacent device, so that the adjacent device configures sharing of the input apparatus among devices according to the configuration file, thereby resolving the problem in the prior that the inter-device shared input apparatus must be manually configured in a display configuration file of each device first, which causes inconvenience to operations. Embodiment 2 of the present invention enables a user to configure all adjacent devices on only one device when configuring the inter-device shared input apparatus, and the operations are convenient.

### Example 3

Referring to FIG. 6, a method for configuring sharing of an input apparatus among devices provided by Example 3 of the present invention includes:
S201: Send an adjacent device search request message by using a communications module of this device according to a predetermined period.

In Example 3 of the present invention, the devices include this device and at least one adjacent device, and the communications module may be a Wi-Fi communications module, an Ethernet interface communications module, a Bluetooth communications module, or the like.

S202: Receive device information fed back by the adjacent device according to the adjacent device search request message.

In Example 3 of the present invention, the device information includes a device name, a network address, a corresponding position (for example, a geographical position), and the like. S203. If this device has completed configuration of sharing the input apparatus among devices, send a query instruction to the adjacent device to query whether the adjacent device has completed the configuration of sharing the input apparatus among devices; if feedback of no configuration is received, send a configuration file of configuring sharing of the input apparatus among devices to the adjacent device, so that the adjacent device configures sharing of the input apparatus among devices according to the configuration file; if feedback of configuration completion is received, a process is terminated; or
if this device does not complete the configuration of sharing the input apparatus among devices, receive an instruction, which is sent by the adjacent device that has completed the configuration of sharing the input apparatus among devices, for querying whether this device has completed the configuration of sharing the input apparatus among devices, so as to enable this device to send feedback of no configuration to the adjacent device that has completed the configuration of sharing the input apparatus among devices, then receive the configuration file of configuring sharing of the input apparatus among devices sent by the adjacent device that has completed the configuration of sharing the input apparatus among devices, and then configure sharing of the input apparatus for this device according to the configuration file.

In Example 3 of the present invention, this device and the adjacent device communicate in a wireless manner, and the wireless manner includes Bluetooth, infrared, or Wi-Fi.

In Example 3 of the present invention, the adjacent device search request message is sent by using the communications module of this device according to the predetermined period, so as to implement the configuration of sharing the input apparatus among devices for this device and the adjacent device, thereby facilitating a user's operations.

### Example 4

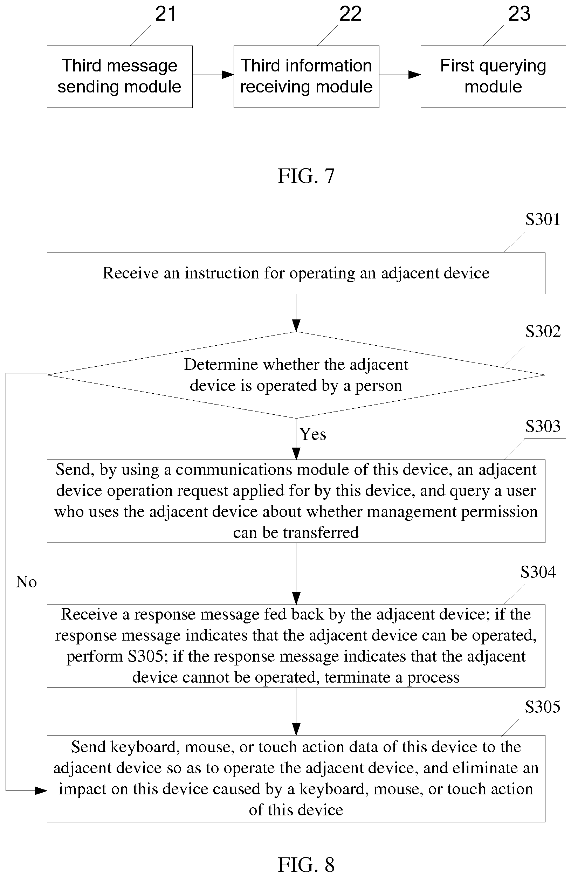

Referring to FIG. 7, a system for configuring sharing of an input apparatus among devices provided by Example 4 of the present invention includes:
a third message sending module 21, configured to send an adjacent device search request message by using a communications module of this device according to a predetermined period, where the devices include this device and at least one adjacent device;
a third information receiving module 22, configured to receive device information fed back by the adjacent device according to the adjacent device search request message;
and
a first querying module 23, configured to: if this device has completed configuration of sharing the input apparatus among devices, send a query instruction to the adjacent device to query whether the adjacent device has completed the configuration of sharing the input apparatus among devices; if feedback of no configuration is received, send a configuration file of configuring sharing of the input apparatus among devices to the adjacent device, so that the adjacent device configures sharing of the input apparatus among devices according to the configuration file.

In Example 4 of the present invention, the system further includes:
a second instruction receiving module, configured to: if this device does not complete the configuration of sharing the input apparatus among devices, receive a query instruction, which is sent by the adjacent device that has completed the configuration of sharing the input apparatus among devices, for querying whether this device has completed the configuration of sharing the input apparatus among devices;
a first feedback sending module, configured to send, by this device, the feedback of no configuration to the adjacent device that has completed the configuration of sharing the input apparatus among devices; and
a configuration file receiving module, configured to receive the configuration file of configuring sharing of the input apparatus among devices sent by the adjacent device that has completed the configuration of sharing the input apparatus among devices, and then configure sharing of the input apparatus for this device according to the configuration file.

In Example 4 of the present invention, the third message sending module sends the adjacent device search request message by using the communications module of this device according to the predetermined period, so as to implement the configuration of sharing the input apparatus among devices for this device and the adjacent device, thereby facilitating a user's operations.

### Example 5

Referring to FIG. 8, a method for operating an adjacent device sharing an input apparatus provided by Example 5 of the present invention includes:
S301. Receive an instruction for operating the adjacent device.

In Example 5 of the present invention, the instruction for operating the adjacent device may be: a mouse cursor of this device naturally moves to a device border and collides with the border according to the predetermined number of times.

S302. Determine whether the adjacent device is operated by a person. If yes, perform step S303; if no, directly perform step S305.

In Example 5 of the present invention, the determining whether the adjacent device is operated by a person specifically includes:
sending query information to the adjacent device by using a communications module of this device to query whether an input interface of the adjacent device is in an idle state;
and
receiving a response message fed back by the adjacent device; if the response message indicates being in the idle state, indicating that the adjacent device is not operated by any person; if the response message indicates not being in the idle state, indicating that the adjacent device is operated by a person.

S303. Send, by using the communications module of this device, an adjacent device operation request applied for by this device, and query a user who uses the adjacent device about whether management permission can be transferred.

S304. Receive a response message fed back by the adjacent device; if the response message indicates that the adjacent device can be operated, perform S305; if the response message indicates that the adjacent device cannot be operated, terminate a process.

S305. Send keyboard, mouse, or touch action data of this device to the adjacent device so as to operate the adjacent device; and eliminating an impact on this device caused by a keyboard, mouse, or touch action of this device.

In Example 5 of the present invention, this device and the adjacent device communicate in a wireless manner, and the wireless manner includes Bluetooth, infrared, or Wi-Fi.

In Example 5 of the present invention, the user can operate the adjacent device sharing the input apparatus in a convenient manner.

### Example 6

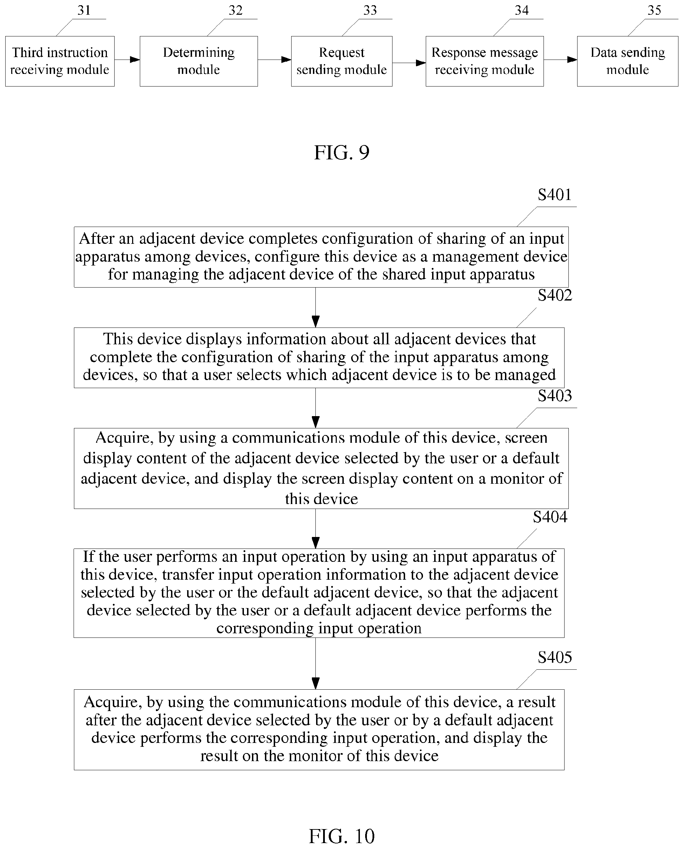

Referring to FIG. 9, a system for operating an adjacent device sharing an input apparatus provided by Example 6 of the present invention includes:
a third instruction receiving module 31, configured to receive an instruction for operating the adjacent device, where the instruction for operating the adjacent device is:
a mouse cursor of this device naturally moves to a device border and collides with the border according to the predetermined number of times;
a determining module 32, configured to determine whether the adjacent device is operated by a person;
a request sending module 33, configured to: when the determining module determines that the adjacent device is operated by a person, send, by using a communications module of this device, an adjacent device operation request applied for by this device, so as to query a user who uses the adjacent device about whether management permission can be transferred;
a response message receiving module 34, configured to receive a response message fed back by the adjacent device; and
a data sending module 35, configured to: when the response message received by the response message receiving module indicates that the adjacent device can be operated, send keyboard, mouse, or touch action data of this device to the adjacent device so as to operate the adjacent device; and eliminating an impact on this device caused by a keyboard, mouse, or touch action of this device.

The determining module specifically includes:
a query information sending module, configured to send query information to the adjacent device by using the communications module of this device to query whether an input interface of the adjacent device is in an idle state; and
a response message receiving module, configured to receive the response message fed back by the adjacent device; if the response message indicates being in the idle state, it indicates that the adjacent device is not operated by any person; if the response message indicates not being in the idle state, it indicates that the adjacent device is operated by a person.

When the determining module determines that the adjacent device is not operated by any person, the data sending module sends the keyboard, mouse, or touch action data of this device to the adjacent device so as to operate the adjacent device; and eliminating an impact on this device caused by a keyboard, mouse, or touch action of this device.

In Example 6 of the present invention, the user can operate the adjacent device sharing the input apparatus in a convenient manner.

### Example 7

Referring to FIG. 10, a method for managing an adjacent device sharing an input apparatus provided by Example 7 of the present invention includes the following steps:
S401. After the adjacent device completes configuration of sharing an input apparatus, configure this device as a management device for managing the adjacent device sharing the input apparatus.

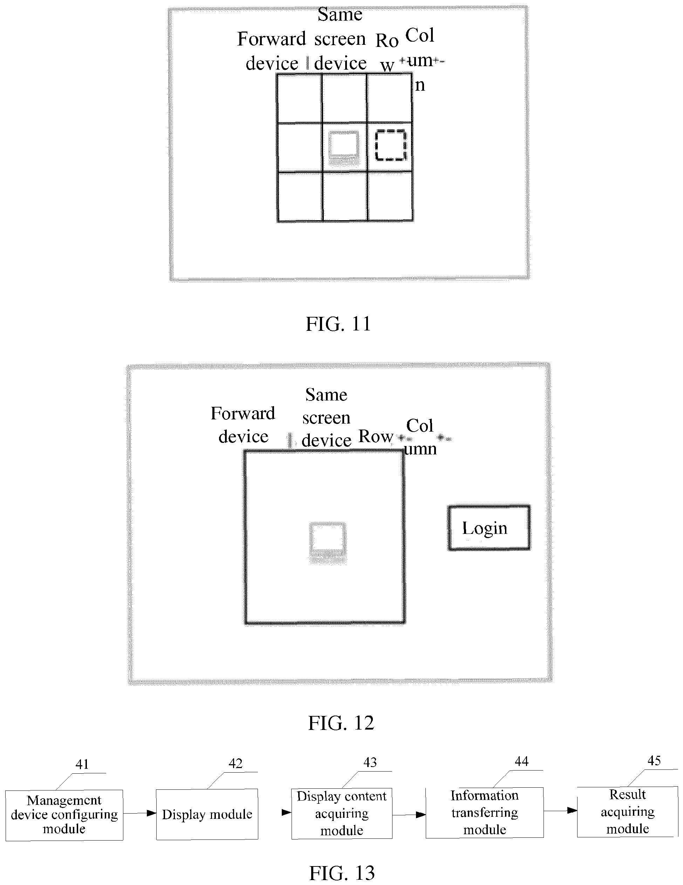

In Example 7 of the present invention, the adjacent device may be configured by using the method for configuring sharing of an input apparatus among devices provided by Embodiment 1 of the present invention, and the adjacent device may also be configured by using the method in the prior art. After the adjacent device completes the configuration of sharing the input apparatus among devices, a position relationship of each device is displayed in an arrangement area of a configuration interface, and a "forward device" button (refer to FIG. 11) that can receive an instruction is displayed in the arrangement area. When a user clicks the "forward device" button, it indicates that the user is going to configure this device as a management device for managing the adjacent device sharing the input apparatus, and a login button (refer to FIG. 12) is further displayed in the interface. When the user clicks the login button, step S402 is performed.

S402. This device displays information about all adjacent devices that complete the configuration of sharing the input apparatus among devices, so that the user selects which adjacent device is to be managed.

S403. Acquire, by using a communications module of this device, screen display content of the adjacent device selected by the user or a default adjacent device, and display the screen display content on a monitor of this device.

S404. If the user performs an input operation by using an input apparatus of this device, transfer input operation information to the adjacent device selected by the user or the default adjacent device, so that the adjacent device selected by the user or the default adjacent device performs the corresponding input operation.

S405. Acquire, by using the communications module of this device, a result after the adjacent device selected by the user or the default adjacent device performs the corresponding input operation, and display the result on the monitor of this device.

In Embodiment 7 of the present invention, the result after the corresponding input operation is performed on the adjacent device selected by the user or the default adjacent device may also be displayed on a monitor of the adjacent device selected by the user or a monitor of the default adjacent device, that is, the same content is displayed on the monitors of this device and the adjacent device selected by the user or the default adjacent device.

In Example 7 of the present invention, this device and the adjacent device communicate in a wireless manner, and the wireless manner includes Bluetooth, infrared, or Wi-Fi.

In Example 7 of the present invention, the user can manage the adjacent device sharing the input apparatus in a convenient manner.

### Example 8

Referring to FIG. 13, a system for managing an adjacent device sharing an input apparatus provided by Example 8 of the present invention includes:
a management device configuring module 41, adapted to: after the adjacent device completes configuration of sharing an input apparatus, configure this device as a management device for managing the adjacent device sharing the input apparatus;
a display module 42, configured to display, by this device, information about all adjacent devices that complete the configuration of sharing the input apparatus among devices, so that a user selects which adjacent device is to be managed;
a display content acquiring module 43, configured to acquire, by using a communications module of this device, screen display content of the adjacent device selected by the user or a default adjacent device, and display the screen display content on a monitor of this device;
an information transferring module 44, configured to: if the user performs an input operation by using an input apparatus of this device, transfer input operation information to the adjacent device selected by the user or the default adjacent device, so that the adjacent device selected by the user or the default adjacent device performs the corresponding input operation; and
a result acquiring module 45, configured to acquire, by using the communications module of this device, a result after the adjacent device selected by the user or the default adjacent device performs the corresponding input operation, and display the result on the monitor of this device.

The system further includes:
a first instruction receiving module, configured to receive an instruction for configuring sharing of an input apparatus among devices, where the devices include this device and
at least one adjacent device;
a first message sending module, configured to send an adjacent device search request message by using the communications module of this device;
a first information receiving module, configured to receive device information fed back by the adjacent device according to the adjacent device search request message;
a first analyzing module, configured to analyze a device name and a network address of the adjacent device according to the device information; and
a first transferring module, configured to transfer a configuration file of configuring sharing of the input apparatus among devices to the adjacent device, so that the adjacent device configures sharing of the input apparatus among devices according to the configuration file.

In Example 8 of the present invention, the user can manage the adjacent device sharing the input apparatus in a convenient manner.

A person of ordinary skill in the art may understand that all or a part of the steps of the methods in the embodiments may be implemented by a program instructing relevant hardware. The program may be stored in a computer readable storage medium, such as a ROM, a RAM, a magnetic disk, or an optical disc.

The foregoing descriptions are merely exemplary embodiments of the present invention, but are not intended to limit the present invention. Any modification, equivalent replacement, or improvement made without departing from the principle of the present invention shall fall within the protection scope of the present invention.

## Claims

1. A method for configuring sharing of an input apparatus among devices (121 - 126), wherein the method comprises:
receiving (S101) an instruction for configuring sharing of an input apparatus among devices (121 - 126) which are placed together, wherein the devices comprise a device, referred to as this device, and at least one adjacent device;
sending (S 102) an adjacent device search request message by using a communications module of this device;
receiving (S103) device information fed back by the adjacent device according to the adjacent device search request message;
analyzing (S104) a device name and a network address of the adjacent device according to the device information;
prompting (S106) the device name of the adjacent device and a display position of the configurable adjacent device relative to this device;
receiving (S107) configuration of the display position of the adjacent device selected by a user relative to this device; and
transferring (S105) a configuration file of configuring sharing of the input apparatus among devices to the adjacent device, so that the adjacent device configures sharing of the input apparatus among devices in a display configuration file of the adjacent device according to the configuration file,
wherein before the receiving (S105) configuration of the display position of the adjacent device selected by a user relative to this device, the method further comprises:
sending an application message indicating whether to intend to accept the configuration to the adjacent device selected by the user; and
receiving an intention message fed back by the adjacent device selected by the user; performing the transferring a configuration file of configuring sharing of the input apparatus among devices to the adjacent device if the intention message indicates an intention to accept the configuration, or terminating a process if the intention message indicates an intention not to accept the configuration.

2. The method according to claim 1, wherein after the transferring (S105) a configuration file of configuring sharing of the input apparatus among devices to the adjacent device, the method further comprises:
receiving confirmed configuration completion information fed back by the adjacent device.

3. The method according to claim 1, wherein the instruction for configuring sharing of an input apparatus among devices is: a display border of this device is touched, a mouse cursor of this device collides with the display border according to the predetermined number of times, a preset file icon of this device collides with the display border according to the predetermined number of times and/or this device is shaken at a predetermined speed.

4. The method according to any one of claims 1 to 3, wherein this device and the adjacent device communicate in a wireless manner, and the wireless manner comprises Bluetooth, infrared, or Wi-Fi.

## Patentansprüche

1. Verfahren zum Konfigurieren der gemeinsamen Nutzung einer Eingabevorrichtung zwischen Einrichtungen (121 - 126), wobei das Verfahren umfasst:
Empfangen (S101) einer Anweisung zum Konfigurieren der gemeinsamen Nutzung einer Eingabevorrichtung zwischen Einrichtungen (121 - 126), die zusammen platziert sind, wobei die Einrichtungen eine Einrichtung, welche als diese Vorrichtung bezeichnet wird, und mindestens eine benachbarte Einrichtung umfassen;
Senden (S102) einer Suchanforderungsmitteilung einer benachbarten Einrichtung unter Verwendung eines Kommunikationsmoduls dieser Einrichtung;
Empfangen (S103) von Einrichtungsinformationen, die von der benachbarten Einrichtung zurückgeführt werden, gemäß der Suchanforderungsmitteilung der benachbarten Einrichtung;
Analysieren (S104) eines Einrichtungsnamens und einer Netzadresse der benachbarten Einrichtung gemäß den Einrichtungsinformationen;
Abfragen (S106) des Einrichtungsnamens der benachbarten Einrichtung und einer Anzeigeposition der konfigurierbaren benachbarten Einrichtung relativ zu dieser Einrichtung;
Empfangen (S107) der Konfiguration der Anzeigeposition der benachbarten Einrichtung, die von einem Nutzer ausgewählt wird, relativ zu dieser Einrichtung;
und
Übertragen (S105) einer Konfigurationsdatei zum Konfigurieren der gemeinsamen Nutzung der Eingabevorrichtung zwischen Einrichtungen zu der benachbarten Einrichtung, so dass die benachbarte Einrichtung die gemeinsame Nutzung der Eingabevorrichtung zwischen Einrichtungen in einer Anzeigekonfigurationsdatei der benachbarten Einrichtung gemäß der Konfigurationsdatei konfiguriert,
wobei vor dem Empfangen (S105) der Konfiguration der Anzeigeposition der benachbarten Einrichtung, die von einem Nutzer ausgewählt wird, relativ zu dieser Einrichtung das Verfahren ferner umfasst:
Senden einer Anwendungsmitteilung, die anzeigt, ob es vorgesehen ist, die Konfiguration an der benachbarten Einrichtung, die von dem Nutzer ausgewählt wird, zu akzeptieren; und
Empfangen einer Intentionsmitteilung, die von der benachbarten Einrichtung, die von dem Nutzer ausgewählt wird, zurückgeführt wird;
Durchführen einer Übertragung einer Konfigurationsdatei zum Konfigurieren der gemeinsamen Nutzung der Eingabevorrichtung zwischen den Einrichtungen zu der benachbarten Einrichtung, wenn die Intentionsmitteilung eine Intention anzeigt, die Konfiguration zu akzeptieren, oder Beenden des Prozesses, wenn die Intentionsmitteilung eine Intention anzeigt, die Konfiguration nicht zu akzeptieren.

2. Verfahren nach Anspruch 1, wobei nach dem Übertragen (S105) einer Konfigurationsdatei zum Konfigurieren der gemeinsamen Nutzung der Eingabevorrichtung zwischen den Einrichtungen zu der benachbarten Einrichtung das Verfahren ferner umfasst:
Empfangen bestätigter Konfigurationsabschlussinformationen, die von der benachbarten Einrichtung zurückgeführt werden.

3. Verfahren nach Anspruch 1, wobei es sich bei der Anweisung zum Konfigurieren der gemeinsamen Nutzung einer Eingabevorrichtung zwischen Einrichtungen um Folgendes handelt: eine Anzeigebegrenzung dieser Vorrichtung wird berührt, ein Mauscursor dieser Vorrichtung kollidiert mit der Anzeigebegrenzung gemäß der vorbestimmten Anzahl von Malen, ein voreingestelltes Datei-Icon dieser Vorrichtung kollidiert mit der Anzeigebegrenzung gemäß einer vorbestimmten Anzahl von Malen und/oder diese Vorrichtung wird mit einer vorbestimmten Geschwindigkeit hin- und herbewegt.

4. Verfahren nach einem der Ansprüche 1 bis 3, wobei diese Einrichtung und die benachbarte Einrichtung auf drahtlose Art kommunizieren und die drahtlose Art Bluetooth, Infrarot oder Wi-Fi umfasst.

## Revendications

1. Procédé de configuration du partage d'un appareil d'entrée parmi des dispositifs (121
- 126), dans lequel le procédé consiste à :
recevoir (S101) une instruction de configuration du partage d'un appareil d'entrée parmi des dispositifs (121 - 126) qui sont placés ensemble, dans lequel les dispositifs comprennent un dispositif, désigné ce dispositif, et au moins un dispositif adjacent ;
envoyer (S102) un message de demande de recherche de dispositif adjacent par utilisation d'un module de communication de ce dispositif ;
recevoir (S103) des informations de dispositif renvoyées par le dispositif adjacent conformément au message de demande de recherche de dispositif ;
analyser (S104) un nom de dispositif et une adresse de réseau du dispositif adjacent conformément aux informations de dispositif ;
inviter à fournir (S106) le nom de dispositif du dispositif adjacent et une position d'affichage du dispositif adjacent configurable par rapport à ce dispositif ;
recevoir (S107) une configuration de la position d'affichage du dispositif adjacent sélectionné par un utilisateur en rapport avec ce dispositif ; et
transférer (S105) un fichier de configuration permettant de configurer le partage de l'appareil d'entrée parmi les dispositifs, au dispositif adjacent de manière à ce que le dispositif adjacent configure le partage de l'appareil d'entrée parmi des dispositifs dans un fichier de configuration d'affichage du dispositif adjacent conformément au fichier de configuration,
dans lequel, avant de recevoir (S105) la configuration de la position d'affichage du dispositif adjacent sélectionné par un utilisateur en rapport avec ce dispositif, le procédé consiste en outre à :
envoyer un message de demande indiquant s'il existe une intention d'accepter la configuration, au dispositif adjacent sélectionné par l'utilisateur ; et
recevoir un message d'intention renvoyé par le dispositif adjacent sélectionné par l'utilisateur ; effectuer le transfert d'un fichier de configuration permettant de configurer le partage de l'appareil d'entrée, parmi des dispositifs, au dispositif adjacent si le message d'intensité indique une intention d'accepter la configuration, ou
mettre un terme au processus si le message d'intention indique une intention de ne pas accepter la configuration.

2. Procédé selon la revendication 1, dans lequel, après le transfert (S 105) d'un fichier de configuration permettant de configurer le partage d'un appareil d'entrée, parmi les dispositifs, au dispositif adjacent, le procédé consiste en outre à :
recevoir des informations d'achèvement de configuration confirmé renvoyées par le dispositif adjacent.

3. Procédé selon la revendication 1, dans lequel l'instruction permettant de configurer le partage d'un appareil d'entrée parmi les dispositifs est la suivante :
une bordure d'affichage de ce dispositif est touchée, un curseur de souris de ce dispositif entre en collision avec une bordure d'affichage d'une façon qui correspond au nombre de fois prédéterminé, une icône de fichier prédéfinie de ce dispositif entre en collision avec la bordure d'affichage conformément au nombre prédéterminé de fois et/ou ce dispositif est secoué à une vitesse prédéterminée.

4. Procédé selon l'une quelconque des revendications 1 à 3, dans lequel ce dispositif et le dispositif adjacent communiquent par une technique sans fil, et la technique sans fil comprend les techniques Bluetooth, infrarouge ou Wi-Fi.
